# EUROPEAN PATENT APPLICATION

(11) **EP 4 640 541 A1**
(43) Date of publication of application: **29.10.2025**
(21) Application number: 25172499.3
(22) Date of filing: 25.04.2025
(51) Int. Cl.: B62J 6/04, B62J 45/00, B62K 11/04, B62M 7/04

(54) **STRADDLED VEHICLE**

(30) Priority: 25.04.2024 JP 2024071436
(71) Applicant: Yamaha Hatsudoki Kabushiki Kaisha, Iwata-shi, Shizuoka 438-8501 (JP)
(72) Inventor: SHIOTA, Akihiro, Iwata-shi, Shizuoka, 4388501 (JP)
(74) Representative: Stöckeler, Ferdinand

(57) **Abstract**

In a straddled vehicle 1, an upper control unit 15 and a lower control unit 14 are placed in a flat orientation in a rear narrow area A1. The rear narrow area A1 is located further backward than a front end 111 of a rear wheel 11 in side view, further upward than a top end 112 of the rear wheel 11 in side view, and between a left seat rail and a right seat rail in top view. The upper control unit 15 and the lower control unit 14 are spaced apart. A lead wire 17 is routed under the upper control unit 15 and over the lower control unit 14, and runs between the upper control unit 15 and the lower control unit 14 in side view to be connected to an electrical component 16. Thus, the number of control units to be mounted in a straddled vehicle is increased while thermal effects that are exerted by the control units on each other are reduced.

## Description

### Technical Field

The present teaching relates to a straddled vehicle.

### Background Art

As the shift toward electronic control and the increase in multifunctionality in straddled vehicles are advancing, straddled vehicles are increasingly being equipped with various control units. Most straddled vehicles are designed to be compact as a whole. Consequently, placing control units therein grows more challenging as the number of control units to be mounted increases. To deal with such a situation, Patent Literature (PTL) 1, for example, discloses a configuration in which a plurality of control units are arranged in an integrated manner.

PTL 1 discloses a straddled vehicle in which two control units are attached to a single case member. A first control unit is stacked on top of a second control unit. The case member to which the two control units are attached is located in a space surrounded by a fuel tank, a seat located behind the fuel tank, a rear cushion, and an outer circumferential part of a rear wheel in side view.

### Citation List

### Patent Literature

PTL 1: Japanese Patent Application Laid-Open Publication No. 2020-147117

### Summary of Invention

### Technical Problem

Qualities such as maneuverability and agility are required for a straddled vehicle. In this regard, arranging two control units in an integrated manner, as in the straddled vehicle disclosed in PTL 1, helps prevent an increase in the number of control units to be mounted in a straddled vehicle and from causing upsizing of the vehicle. Meanwhile, control units, which are electrical components, generate heat. In an arrangement in which the distance between the two control units is short, heat generated by one of the control units is easily transferred to the other control unit. In particular, the temperature of a control unit that includes a regulator and a rectifier is likely to rise.

An object of the present teaching is to provide a straddled vehicle that makes it possible to increase the number of control units to be mounted therein while reducing thermal effects that are exerted by the control units on each other.

### Solution to Problem

The present inventor first gave consideration to the location of two control units, which are arranged close together. Various components are mounted in a straddled vehicle. For example, an engine, a transmission, and a battery are large components and require large placement space. Furthermore, the locations of such large components affect the position of the center of gravity of the vehicle. It is therefore desirable to place large components at or around the center of the vehicle. By contrast, control units generally have a flat rectangular parallelepiped shape, and are thin in thickness compared to width and depth thereof. The control units can be therefore accommodated even in a flat section (section that is thin in the up-down direction) of the straddled vehicle, where it is difficult to place large components. Placing the control units in a location that takes advantage of the characteristics of the shape of the control units allows for extra space for placing another component, achieving effective space utilization.

The present inventor gave consideration to the most suitable flat section for the placement of the control units in the straddled vehicle. The rear wheel of the straddled vehicle moves up and down to accommodate irregularities of road surfaces. The straddled vehicle therefore has space above the rear wheel. A portion of the straddled vehicle that is located further backward than the front end of the rear wheel, which in particular is a portion located further backward than the front end of the passenger seat, is therefore provided at a higher location in the up-down direction so as to keep a distance from the rear wheel. However, considering the ease of access to the seats and the design lines of the vehicle, it is desirable to locate the surfaces of the seats as low as possible. For these reasons, the portion of the straddled vehicle that is located further backward than the front end of the rear wheel (referred to below as a rear narrow area) is likely to have a flat shape with a short length in the up-down direction. The present inventor focused on the rear narrow area in the straddled vehicle and thought that it would be optimal to place the two control units in this flat section.

The present inventor then gave consideration to thermal effects that are exerted by the two control units placed in the rear narrow area on each other. In a configuration in which the two control units are arranged in an integrated manner, for example, heat generated by one of the control units is easily transferred to the other control unit. A possible way to prevent heat generated by one of the control units from being easily transferred to the other control unit is to physically separate the two control units. Thus, the present inventor arrived at an idea that both of the two control units should be placed in the rear narrow area and physically separated from each other.

However, an electrical component such as rear lighting equipment is provided at or around the back end of the straddled vehicle. A battery that supplies electric power to the rear lighting equipment tends to be provided at or around the center of the straddled vehicle in the front-back direction of the straddled vehicle. A lead wire connecting the battery to the rear lighting equipment is therefore routed through the rear narrow area in the straddled vehicle. Furthermore, although the two control units have a flat shape, the size thereof is still considerable. Even if the two control units are successfully placed in the rear narrow area with a distance therebetween for reducing the mutual thermal effects, it is not easy to route the lead wire for the electrical component in addition to placing the two control units in the rear narrow area, which is narrow in the up-down, left-right, and front-back directions. Based on the considerations described above, the present inventor arrived at the idea of the present teaching described below.
(1) A straddled vehicle according to the present teaching includes:
   a rear wheel;
   a left seat rail located further leftward than a center of the straddled vehicle in a left-right direction of the straddled vehicle, at least a portion of the left seat rail extending further backward than a front end of the rear wheel in side view;
   a right seat rail located further rightward than the center of the straddled vehicle in the left-right direction of the straddled vehicle, at least a portion of the right seat rail extending further backward than the front end of the rear wheel in side view;
   a lower control unit that controls the straddled vehicle;
   an upper control unit that controls the straddled vehicle, at least a portion of the upper control unit being located further upward than the lower control unit;
   an electrical component that is different from the upper control unit and the lower control unit; and
   a lead wire extending in a front-back direction of the straddled vehicle and connected to the electrical component, wherein
   at least a portion of the upper control unit is located further upward than the lower control unit in side view, the upper control unit and the lower control unit are spaced apart, and thus the upper control unit and the lower control unit are placed in a flat orientation in a rear narrow area, allowing the lead wire to be routed under the upper control unit and over the lower control unit, and run between the upper control unit and the lower control unit in side view to be connected to the electrical component, and
   the rear narrow area is an area in the straddled vehicle that is located further backward than the front end of the rear wheel in side view, further upward than a top end of the rear wheel in side view, and between the left and right seat rails in top view.

In general, control units have a thin shape. In the straddled vehicle described above, the two control units are placed in the rear narrow area, which is a thin area having a short length in the up-down direction, taking advantage of the characteristics of the shape of the control units. Furthermore, since the two control units are spaced apart in the rear narrow area, heat generated in one of the control units is less likely to affect the other control unit. Furthermore, the lead wire is routed through a gap between the two control units that is created by spacing the two control units apart. This configuration eliminates the need to create a new space in the rear narrow area for routing the lead wire. Furthermore, the heat from one of the control units, if generated, is likely to be transferred to the lead wire rather than to the other control unit, because the lead wire is closer than the other control unit. Besides, the lead wire extends in the front-back direction of the straddled vehicle and is connected to the electrical component. The heat transferred to the lead wire propagates along the lead wire away from the two control units in the front-back direction. In a configuration in which the electrical component is a taillight, for example, the heat transferred to the lead wire is allowed to travel to and dissipate at the back end of the straddled vehicle. Thus, as a result of the lead wire running between the two control units, it is possible to further reduce the thermal effects that are exerted by the two control units on each other. As described above, in the straddled vehicle described above, the two control units are spaced apart in the rear narrow area, and the lead wire is routed between the two control units. Thus, it is possible to increase the number of control units to be mounted while reducing thermal effects that are exerted by the control units on each other. The distance between the two control units refers to the shortest distance between the two control units.

(2) In the straddled vehicle described in (1), the upper control unit and the lower control unit may be placed in a flat orientation in the rear narrow area, allowing the lead wire to intersect, in side view, with a virtual line connecting corner portions of the upper control unit and the lower control unit that are closest to one another, to be connected to the electrical component.

In the straddled vehicle described above, the lead wire runs between a corner portion of the upper control unit and a corner portion of the lower control unit that is closest to the corner portion of the upper control unit. Thus, as in the foregoing, it is possible to increase the number of control units to be mounted while reducing thermal effects that are exerted by the control units on each other.

(3) In the straddled vehicle described in (1) or (2), the upper control unit may be located further upward than a virtual plane including an upper surface of the lower control unit in side view, the upper control unit and the lower control unit may be spaced apart, and thus the upper control unit and the lower control unit may be placed in a flat orientation in the rear narrow area, allowing the lead wire to run between an upper corner portion and a lower corner portion to be connected to the electrical component, the upper corner portion being a corner portion closest to the lower control unit among corner portions of a lower surface of the upper control unit in side view, the lower corner portion being a corner portion closest to the upper corner portion among corner portions of an upper surface of the lower control unit.

In general, a control unit is connected to a battery. In a straddled vehicle, the battery is usually located at or around the center of the vehicle in the front-back direction of the vehicle. Accordingly, a control unit placed in a rear narrow area located in a rear portion of the vehicle typically has, in the front surface thereof, a port for plugging an electrical cable that connects to the battery. Suppose that two control units are placed in the rear narrow area and arranged side by side in the front-back direction, and the distance between the two control units in the front-back direction is short. In this case, for example, an electrical cable extending from the battery is routed over or under the control unit located frontward, and is bent and plugged into the port provided in the front surface of the control unit located backward. The electrical cable that is connected to each control unit includes a plurality of wires. The electrical cable therefore has a certain level of thickness and stiffness, and is not easy to bend. A possible solution to this issue is to increase the distance between the two control units in the front-back direction. In this case, however, it is difficult to compactly arrange the two control units. By contrast, in the straddled vehicle described in (3), the upper control unit is located further upward than the lower control unit, with the virtual plane including the upper surface of the lower control unit as a boundary therebetween. This arrangement allows the electrical cable connecting the battery to each of the upper control unit and the lower control unit to be in a straight line, eliminating the need to bend the electrical cable as much. The straddled vehicle described above therefore allows for an improvement in assemblability of the two control units.

Suppose that the upper control unit is located further upward than the lower control unit and the electrical component is located further backward than the two control units. In this case, the lead wire that is connected to the electrical component needs to be routed over or under the two control units and extend to the electrical component. In a configuration in which the lead wire is routed over the two control units, it is difficult for the lead wire to extend in a straight line to the electrical component. Accordingly, the length of the lead wire is likely to be longer. In a configuration in which the lead wire is routed under the two control units, the distance between the lead wire and the upper control unit is longer, and it is difficult to improve the assemblability with respect to the upper control unit. By contrast, in the straddled vehicle described in (3), the lead wire runs between the upper control unit and the lower control unit. This configuration helps reduce the length of the lead wire compared to the configuration in which the lead wire is routed over the two control units. This configuration also helps improve the assemblability with respect to the upper control unit compared to the configuration in which the lead wire is routed under the two control units.

(4) In the straddled vehicle described in any one of (1) to (3), at least a portion of the lower control unit may be located further frontward than the upper control unit in side view, the upper control unit and the lower control unit may be spaced apart, and thus the upper control unit and the lower control unit may be placed in a flat orientation in the rear narrow area, allowing the lead wire to run between the upper control unit and the lower control unit in side view to be connected to the electrical component.

In general, the rear narrow area in a straddled vehicle extends backward and diagonally upward. The rear narrow area is configured so that at least a portion thereof follows the shape of the rear fender in side view. The length of the rear narrow area in the up-down direction decreases toward the rear. In the straddled vehicle described in (4), the two control units are placed along such a shape of the rear narrow area in the straddled vehicle. As such, the straddled vehicle described above allows for effective utilization of the space of the rear narrow area. In a configuration in which at least a portion of the upper control unit is located further frontward than the lower control unit in side view, the straddled vehicle has a space under the portion of the upper control unit that is located further frontward than the lower control unit. In this configuration, such a space can be effectively utilized by using the space for routing the lead wire or using the space as a work space for plugging an electrical cable into the lower control unit.

(5) In the straddled vehicle described in any one of (1) to (4), at least a portion of the upper control unit may overlap the lower control unit in top view, the upper control unit and the lower control unit may be spaced apart in side view, and thus the upper control unit and the lower control unit may be placed in a flat orientation in the rear narrow area, allowing the lead wire to run through an overlapping area where at least a portion of the upper control unit overlaps the lower control unit in top view, to be connected to the electrical component.

In the straddled vehicle described in (5), the two control units are arranged so as to overlap each other in the up-down direction. The straddled vehicle described above therefore allows the rear narrow area to be compact in the front-back direction and in the left-right direction.

(6) The straddled vehicle described in any one of (1) to (5) may further include a case attached to the left seat rail and the right seat rail and supporting the upper control unit and the lower control unit, wherein
the upper control unit is attached to the case so as to be detachable upward and the lower control unit is attached to the case so as to be detachable downward in side view, the upper control unit and the lower control unit may be spaced apart, and thus the upper control unit and the lower control unit may be placed in a flat orientation in the rear narrow area, allowing the lead wire to run between the upper control unit and the lower control unit in side view to be connected to the electrical component.

In the straddled vehicle described in (6), for example, the upper control unit is attached to the upper surface of a bottom part of the case and the lower control unit is attached to the lower surface of the bottom part of the case. The configuration in which the two control units are attached to a common case eliminates the need to provide a case for each of the two control units. This configuration also allows the upper control unit and the lower control unit to be mounted using a single case, making it easier to arrange the two control units so that the two control units overlap each other in the up-down direction. Furthermore, the presence of the case between the two control units helps reduce the thermal effects that are exerted by the two control units on each other.

(7) The straddled vehicle described in any one of (1) to (6) may further include a case attached to the left seat rail and the right seat rail and supporting the upper control unit and the lower control unit, the case including a retaining part provided on a path of the lead wire, wherein
the retaining part restricts a range of motion of the lead wire at least in an up-down direction, and the upper control unit and the lower control unit may be placed in a flat orientation in the rear narrow area, allowing the lead wire to run between the upper control unit and the lower control unit in side view to be connected to the electrical component.

The straddled vehicle is subject to various vibrations such as vibration due to traveling and vibration from the engine. Without the restriction of the range of motion of the lead wire, the lead wire may make contact with a control unit, depending on the wire length and stiffness thereof, which vary from lead wire to lead wire. If this is the case, the control unit is susceptible to vibrations other than the foreseeable vibrations such as vibration due to traveling. The difficulty in foreseeing vibrations that may be applied to the control unit gives rise to the need to attach a number of vibration mitigating members to the control unit, leading to an increase in the number of components. In the straddled vehicle described in (7), the retaining part restricts the range of motion of the lead wire at least in the up-down direction. In the straddled vehicle described above, therefore, the control unit is kept from making contact with the lead wire. The control unit is therefore less likely to undergo vibrations other than the foreseeable vibrations. Furthermore, as a result of the range of motion of the lead wire being restricted, the distance between the control unit and the lead wire can be reduced. Consequently, heat generated in one of the control units is easily transferred to the lead wire, and due to the thus achieved heat dissipation, is prevented from being easily transferred to the other control unit. Thus, the straddled vehicle described above makes it possible to compactly arrange the two control units and the lead wire in the rear narrow area while reducing the thermal effects that are exerted by the control units on each other.

(8) In the straddled vehicle described in any one of (1) to (7) , at least a portion of the lower control unit may be located further frontward than the upper control unit in side view, the upper control unit and the lower control unit may be spaced apart, and thus the upper control unit and the lower control unit may be placed in a flat orientation in the rear narrow area, allowing the lead wire to run between the upper control unit and the lower control unit in side view to be connected to the electrical component, and allowing an accommodation space for accommodating a component to be provided under the upper control unit and behind the lower control unit.

In the straddled vehicle described in (8), at least a portion of the lower control unit is located further frontward than the upper control unit. This configuration makes it easy to form a space under the upper control unit and behind the lower control unit. In the straddled vehicle described above, the thus formed space is used to accommodate a component. Thus, the straddled vehicle described above allows for effective utilization of the space of the rear narrow area. No particular limitations are placed on the component to be placed in this accommodation space. Examples of such components include electrical parts and accessories for the straddled vehicle.

(9) In the straddled vehicle described in any one of (1) to (8), the upper control unit and the lower control unit may be spaced apart by a distance shorter than the maximum depth of the upper control unit or the lower control unit, and thus the upper control unit and the lower control unit may be placed in a flat orientation in the rear narrow area, allowing the lead wire to run between the upper control unit and the lower control unit to be connected to the electrical component.

(10) In the straddled vehicle described in any one of (1) to (9), the upper control unit and the lower control unit may be spaced apart by a distance shorter than the maximum width of the upper control unit or the lower control unit, and thus the upper control unit and the lower control unit may be placed in a flat orientation in the rear narrow area, allowing the lead wire to run between the upper control unit and the lower control unit to be connected to the electrical component.

(11) In the straddled vehicle described in any one of (1) to (10), the upper control unit and the lower control unit may be spaced apart by a distance shorter than the maximum thickness of the upper control unit or the lower control unit, and thus the upper control unit and the lower control unit may be placed in a flat orientation in the rear narrow area, allowing the lead wire to run between the upper control unit and the lower control unit to be connected to the electrical component.

In the straddled vehicle described in (9) to (11), the two control units are disposed in positions close to each other. Thus, the straddled vehicle described in (9) to (11) allows the two control units to be arranged in the rear narrow area with a distance therebetween.

(12) In the straddled vehicle described in any one of (1) to (11), the electrical component may be located further backward than the upper control unit and the lower control unit, and the upper control unit and the lower control unit may be placed in a flat orientation in the rear narrow area, allowing the lead wire to be connected to the electrical component.

(13) In the straddled vehicle described in (12), the electrical component may be rear lighting equipment, and the upper control unit and the lower control unit may be placed in a flat orientation in the rear narrow area, allowing the lead wire to be connected to the electrical component.

In the straddled vehicle described in (12) and (13), the electrical component, to which the lead wire running between the two control units is connected, is located further backward than the two control units. The straddled vehicle described above is particularly suitable for a case where the lead wire needs to be routed to a location further backward than the two control units.

The following describes configurations, terms, and the like for the present teaching.

The "straddled vehicle" is, for example, a transportation means. The straddled vehicle is, for example, a vehicle that is driven by a person. The straddled vehicle is, for example, a vehicle of which a driver straddles a seat thereof when seated thereon. In the case of the straddled vehicle, for example, the left foot of the driver seated thereon is positioned to the left of the center of the straddled vehicle in the left-right direction of the straddled vehicle, and the right foot thereof is positioned to the right of the center of the straddled vehicle in the left-right direction of the straddled vehicle. The straddled vehicle is, for example, a motorcycle. The straddled vehicle is not limited to motorcycles and may be, for example, a motor tricycle. The straddled vehicle includes, for example, at least one front wheel and at least one rear wheel. No particular limitations are placed on the type of the straddled vehicle. Examples of straddled vehicles include mopeds, off-road motorcycles, and on-road motorcycles. The straddled vehicle may have a cabin. The straddled vehicle is, for example, an engine-powered vehicle that runs solely on power generated by an engine. The straddled vehicle may be, for example, a hybrid vehicle equipped with an engine and an electric motor. The straddled vehicle may be, for example, an electric vehicle that runs solely on power generated by an electric motor.

The "rear wheel" includes, for example, a metal component and a rubber component attached to the metal component. The front end of the rear wheel refers to a front end of the rubber component in side view. The top end of the rear wheel refers to a top end of the rubber component in side view.

The "left and right seat rails" form part of the vehicle body. The left and right seat rails are, for example, part of a frame that forms the vehicle body. The left and right seat rails support, for example, the driver seat and/or the passenger seat. Each of the left and right seat rails extends, for example, in the front-back direction in top view. However, for example, each of the left and right seat rails does not have to extend precisely in the front-back direction. Each of the left and right seat rails may be, for example, angled relative to the front-back direction. For example, each of the left and right seat rails extends toward the rear diagonally upward in side view. It is only necessary that, for example, each of the left and right seat rails be longer in the front-back direction than in the left-right direction and in the up-down direction. Each of the left and right seat rails may be, for example, curved.

Each of the left and right seat rails is, for example, provided so that at least a portion thereof is located further backward than the front wheel. Each of the left and right seat rails is, for example, provided so that at least a portion thereof is located further backward than a prime mover. The prime mover is, for example, an engine and/or a motor. Each of the left and right seat rails is, for example, provided so that at least a portion thereof is located further backward than the center of the straddled vehicle in the front-back direction of the straddled vehicle. Each of the left and right seat rails has, for example, a front end portion that is connected to a main frame. The left and right seat rails may be, for example, integral to the main frame or separate from the main frame. The main frame is, for example, provided so that at least a portion thereof is located further frontward than the left and right seat rails. The main frame supports, for example, the prime mover. The main frame includes, for example, a head pipe that supports a steering mechanism. Each of the left and right seat rails has, for example, a back end portion located further backward than the central axis of the rear wheel. The central axis of the rear wheel is, for example, equivalent to the rotation axis of the rear wheel. Each of the left and right seat rails has, for example, a back end portion that supports rear lighting equipment.

The left and right seat rails are, for example, separated from each other in the left-right direction. The left and right seat rails are, for example, spaced apart by a distance shorter than the maximum width (maximum length in the left-right direction) of the straddled vehicle. The left and right seat rails are, for example, spaced apart by a distance shorter than the maximum width (maximum length in the left-right direction) of the main frame. The left seat rail is, for example, provided so that at least a portion thereof is located further leftward than the center of the straddled vehicle in the left-right direction of the straddled vehicle. The right seat rail is, for example, provided so that at least a portion thereof is located further rightward than the center of the straddled vehicle in the left-right direction of the straddled vehicle.

Each of the left and right seat rails is, for example, provided so that at least a portion thereof is located further upward than the rear wheel. Each of the left and right seat rails is, for example, provided so that at least a portion thereof is located further downward than the driver seat and/or the passenger seat.

The "lower control unit" and the "upper control unit" are, for example, electrical components. Each of the lower and upper control units includes, for example, a processor such as a central processing unit (CPU). Each of the lower and upper control units performs, for example, various controls through the processor reading and executing one or more programs recorded in non-volatile memory. No particular limitations are placed on the type of the lower and upper control units. The lower and upper control units may have, for example, different functions or the same functions.

The lower control unit may be, for example, provided so that at least a portion thereof is located further frontward than the upper control unit. The lower control unit may be, for example, provided so that at least a portion thereof is located further backward than the upper control unit. The lower control unit may be, for example, provided so that at least a portion thereof is located further leftward than the upper control unit. The lower control unit may be, for example, provided so that at least a portion thereof is located further rightward than the upper control unit. The lower control unit may be, for example, provided so that at least a portion thereof is located further downward than the left and right seat rails. The lower control unit has, for example, a substantially rectangular parallelepiped shape. The lower control unit has, for example, a port to which an electrical cable is connected. The lower control unit has, for example, a port into which an electrical cable extending in the front-back direction is plugged. The lower control unit has, for example, the port in the front surface thereof.

The lower corner portion of the lower control unit is, for example, defined by the upper surface and the back surface or the front surface of a projected view of the lower control unit in the left-right direction. The lower corner portion may be, for example, rounded. The lower corner portion is, for example, defined by the back edge or the front edge of the upper surface of the lower control unit. In a configuration in which the upper surface of the lower control unit is flat, the virtual plane including the upper surface of the lower control unit is, for example, defined by the entire upper surface of the lower control unit. In a configuration in which the upper surface of the lower control unit is stepped, the virtual plane including the upper surface of the lower control unit is, for example, defined by a plane having the largest area among planes of the upper surface of the lower control unit.

The upper control unit may be, for example, provided so that at least a portion thereof is located further frontward than the lower control unit. The upper control unit may be, for example, provided so that at least a portion thereof is located further backward than the lower control unit. The upper control unit may be, for example, provided so that at least a portion thereof is located further leftward than the lower control unit. The upper control unit may be, for example, provided so that at least a portion thereof is located further rightward than the lower control unit. The upper control unit may be, for example, provided so that at least a portion thereof is located further upward than the left and right seat rails. The upper control unit has, for example, a substantially rectangular parallelepiped shape. The size of the upper control unit may be, for example, larger or smaller than, or the same as the size of the lower control unit. The upper control unit has, for example, a port to which an electrical cable is connected. The upper control unit has, for example, a port into which an electrical cable extending in the front-back direction is plugged. The upper control unit has, for example, the port in the front surface thereof.

The upper corner portion of the upper control unit is, for example, defined by the lower surface and the back surface or the front surface of a projected view of the upper control unit in the left-right direction. The upper corner portion of the upper control unit may be, for example, defined by the upper surface and the front surface of a projected view of the upper control unit in the left-right direction. The upper corner portion may be, for example, rounded. The upper corner portion is, for example, defined by the back edge or the front edge of the upper surface or the lower surface of the upper control unit.

The "lead wire" includes, for example, a plurality of wires. The lead wire has, for example, a configuration including a plurality of wires bound together using a sheathed tube. The lead wire conducts, for example, electric power to be supplied to an electrical component. The lead wire is, for example, connected to rear lighting equipment. Examples of rear lighting equipment include a tail lamp, a rear brake lamp, and rear direction indicator lamps. However, the lead wire is not limited to being connected to rear lighting equipment. The lead wire may be, for example, connected to any of a headlamp, a position lamp, front direction indicator lamps, and a display panel. The lead wire may be, for example, connected to a relay. The lead wire may include, for example, an upper branch wire that is connected to the upper control unit. The lead wire may include, for example, a lower branch wire that is connected to the lower control unit.

The "rear narrow area" is, for example, space where the lower control unit and the upper control unit are accommodated. The rear narrow area is, for example, space inside the straddled vehicle. The rear narrow area is, for example, located further downward than the driver seat and/or the passenger seat. The rear narrow area is, for example, located further upward than the range of motion of the rear wheel in the up-down direction. The rear narrow area is, for example, located further upward than the rear fender. The rear narrow area is, for example, located further frontward than the back end of the left seat rail and the back end of the right seat rail.

The "flat orientation" refers to, for example, an orientation of an object in which, among projected views of the object in the up-down direction, the left-right direction, and the front-back direction, the projected view in the up-down direction has the largest projected area. In other words, the flat orientation refers to, for example, an orientation of an object in which a surface having the largest area among surfaces of the object faces in the up-down direction. The flat orientation refers to, for example, an orientation of an object in which the length of the object in the up-down direction is shorter than the length of the object in the left-right direction and the length of the object in the front-back direction. However, an object placed in a flat orientation may be, for example, at an angle to the front-back direction in side view.

The "case" has, for example, a box shape. The case has, for example, a U-shape in a cross section perpendicular to the front-back direction. The case has, for example, an open top surface. The case is, for example, provided so as to span across the left and right seat rails. The case is, for example, provided so that at least a portion thereof is located between the lower control unit and the upper control unit. The case is, for example, provided so as to partition the lower control unit from the upper control unit. The lower control unit is, for example, attached to the lower surface of the bottom part of the case. The upper control unit is, for example, attached to the upper surface of the bottom part of the case.

### Advantageous Effects of Invention

According to the present teaching, it is possible to increase the number of control units to be mounted in a straddled vehicle while reducing thermal effects that are exerted by the control units on each other.

### Brief Description of Drawings

[FIG. 1] FIG. 1(A) is a left side view of a straddled vehicle according to an embodiment, and FIG. 1(B) is a left side view of a configuration of a rear narrow area and the vicinity thereof in the straddled vehicle according to the present embodiment.
[FIG. 2] FIG. 2 is a top-down perspective view of the rear narrow area in the straddled vehicle according to the present embodiment.
[FIG. 3] FIG. 3 is a schematic left side view of an arrangement of an upper control unit, a lower control unit, and a lead wire in the straddled vehicle according to the present embodiment.
[FIG. 4] FIG. 4 is a schematic left side view of an attachment structure of the upper control unit and the lower control unit in the straddled vehicle according to the present embodiment.
[FIG. 5] FIG. 5 is a schematic left side view of modification examples of the arrangement of the upper control unit and the lower control unit in the straddled vehicle according to the present embodiment.

### Description of Embodiments

The following describes a straddled vehicle according to an embodiment of the present teaching with reference to the drawings. It should be noted that the embodiment described below is merely an example. The present teaching should never be construed in a limited way based on the embodiment described below. In the drawings, the letters F, B, U, D, L, and R, which indicate directions, mean front, back, up, down, left, and right, respectively.

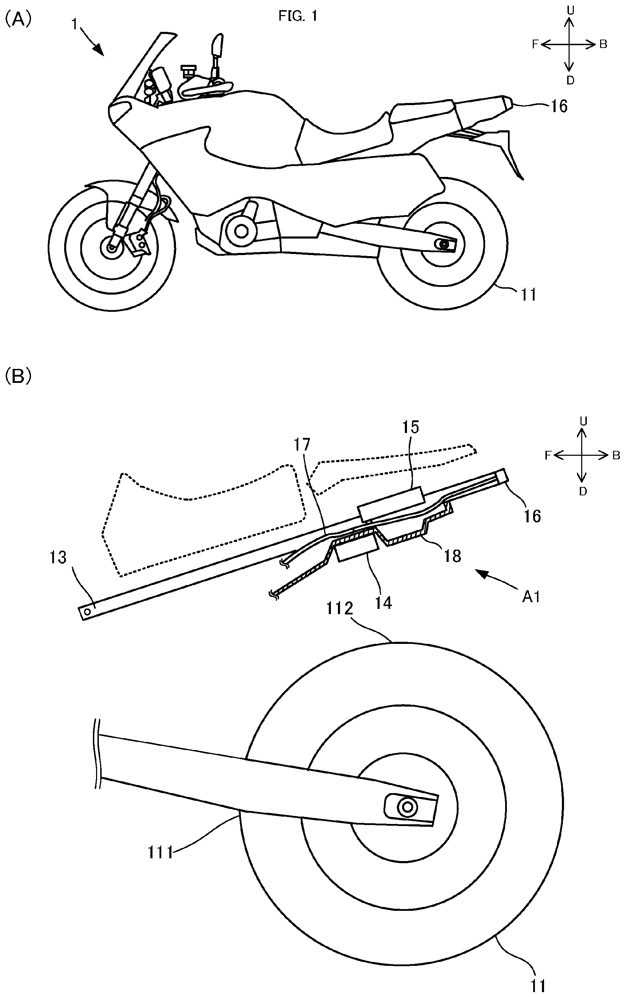

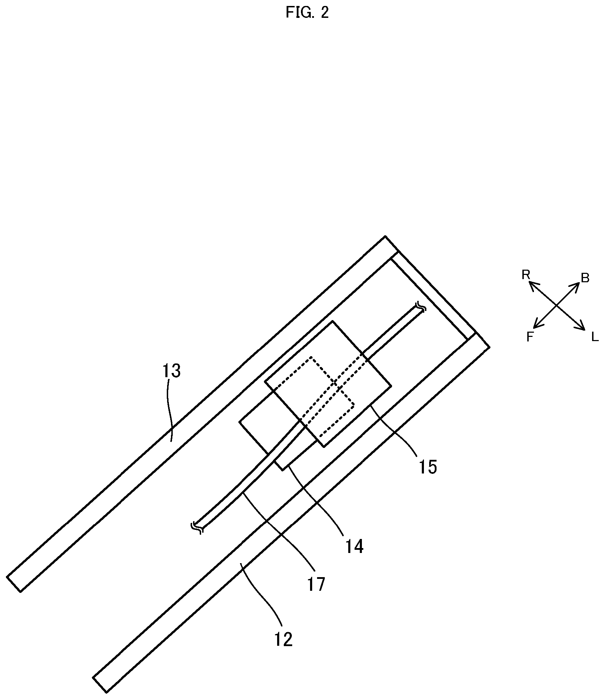

FIG. 1(A) is a left side view of a straddled vehicle according to the present embodiment. A straddled vehicle 1 according to the present embodiment is a motorcycle. The straddled vehicle 1 includes a rear wheel 11, a left seat rail 12, a right seat rail 13 (FIG. 2), a lower control unit 14 (FIG. 1(B)), an upper control unit 15 (FIG. 1(B)), an electrical component 16 (FIG. 1(A)), and a lead wire 17 (FIG. 1(B)).

The rear wheel 11 is located further backward than the center of the straddled vehicle in the front-back direction of the straddled vehicle. The rear wheel 11 is a drive wheel. The rear wheel 11 is attached to a swing arm. The rear wheel 11 is movable up and down.

FIG. 1(B) is a left side view of a configuration of a rear narrow area and the vicinity thereof in the straddled vehicle according to the present embodiment. The lower control unit 14 and the upper control unit 15 control the straddled vehicle 1. The lower control unit 14 and the upper control unit 15 are electrical components that control various functions of the straddled vehicle, and no particular limitations are placed thereon. The upper control unit 15 controls various motors mounted in the straddled vehicle. The upper control unit 15 is provided so that at least a portion thereof is located further upward than the lower control unit 14 in side view. The upper control unit 15 is spaced from the lower control unit 14 in side view. The upper control unit 15 and the lower control unit 14 are placed in a flat orientation in a rear narrow area A1 in their entireties. However, the upper control unit 15 and the lower control unit 14 do not have to be placed in a flat orientation in the rear narrow area A1 in their entireties. That is, it is sufficient that at least a portion of the upper control unit 15 and at least a portion of the lower control unit 14 are placed in a flat orientation in the rear narrow area A1.

The rear narrow area A1 is an area in the straddled vehicle 1 that is located further backward than a front end 111 of the rear wheel 11 in side view. The rear narrow area A1 is located further upward than a top end 112 of the rear wheel 11 in side view. The rear narrow area A1 is located between the left seat rail 12 and the right seat rail 13 in top view.

FIG. 2 is a top-down perspective view of the rear narrow area in the straddled vehicle according to the present embodiment. The left seat rail 12 and the right seat rail 13 each form a vehicle body. The left seat rail 12 and the right seat rail 13 are spaced apart in the left-right direction by a predetermined distance. The left seat rail 12 and the right seat rail 13 each extend so that at least a portion thereof is located further backward than the front end 111 of the rear wheel 11 in side view. A driver seat and a passenger seat are provided on the left seat rail 12 and the right seat rail 13. The left seat rail 12 and the right seat rail 13 support the driver seat and the passenger seat.

Referring to FIG. 1(B), the electrical component 16 is an electrical component that is different from the upper control unit 15 and the lower control unit 14. The electrical component 16 is located further backward than the upper control unit 15 and the lower control unit 14. The electrical component 16 of the present embodiment is rear lighting equipment. No particular limitations are placed on the rear lighting equipment. Examples of rear lighting equipment include a tail lamp, a rear brake lamp, and rear direction indicator lamps.

The lead wire 17 extends in the front-back direction of the straddled vehicle 1 and is connected to the electrical component 16. The lead wire 17 is routed under the upper control unit 15 and over the lower control unit 14. The lead wire 17 runs between the upper control unit 15 and the lower control unit 14 in side view to be connected to the electrical component 16.

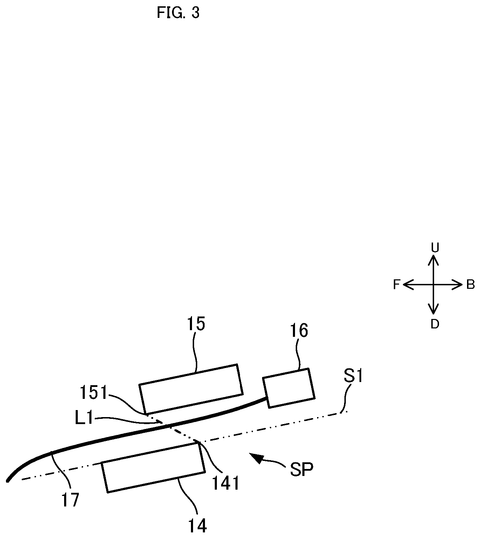

FIG. 3 is a schematic left side view of an arrangement of the upper control unit, the lower control unit, and the lead wire in the straddled vehicle according to the present embodiment. The lead wire 17 intersects, in side view, with a virtual line L1 connecting corner portions of the upper control unit 15 and the lower control unit 14 that are closest to one another, to be connected to the electrical component 16. The lead wire 17 runs between an upper corner portion 151, which is a corner portion closest to the lower control unit 14 among corner portions of the lower surface of the upper control unit 15 in side view, and a lower corner portion 141, which is a corner portion closest to the upper corner portion 151 among corner portions of the upper surface of the lower control unit 14, to be connected to the electrical component 16.

The upper control unit 15 is located further upward than a virtual plane S1 including the upper surface of the lower control unit 14 in side view. At least a portion of the lower control unit 14 is located further frontward than the upper control unit 15 in side view. Thus, an accommodation space SP for accommodating a component is provided under the upper control unit 15 and behind the lower control unit 14. At least a portion of the upper control unit 15 overlaps the lower control unit 14 in top view. The lead wire 17 runs through an overlapping area where at least a portion of the upper control unit 15 overlaps the lower control unit 14 in top view, to be connected to the electrical component 16.

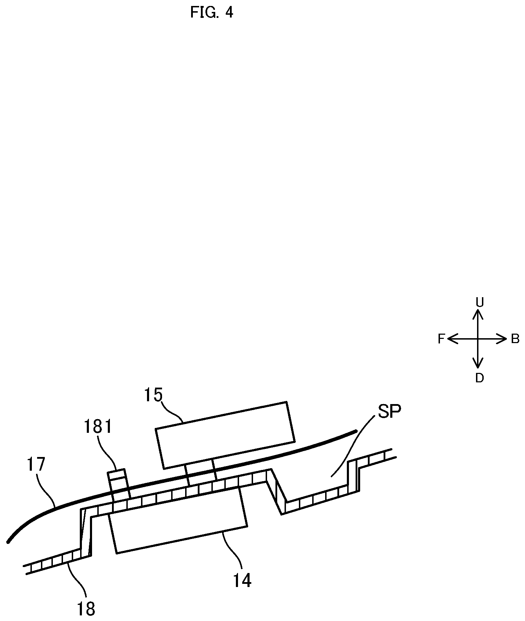

FIG. 4 is a schematic left side view of an attachment structure of the upper control unit and the lower control unit in the straddled vehicle according to the present embodiment. The straddled vehicle 1 includes a case 18. The case 18 has a box shape in cross-sectional view perpendicular to the front-back direction. The case 18 has an open top surface. The case 18 is attached to the left seat rail 12 and the right seat rail 13. The case 18 supports the upper control unit 15 and the lower control unit 14. The upper control unit 15 is inserted into ribs provided on the case 18. The lower control unit 14 is bolted to the case 18. The case 18 includes a retaining part 181 provided on the path of the lead wire 17. The retaining part 181 has a claw-like shape. The retaining part 181 restricts the range of motion of the lead wire 17 at least in the up-down direction.

The upper control unit 15 and the lower control unit 14 are attached to a bottom part of the case 18. In this regard, the upper control unit 15 is attached to the case 18 so as to be detachable upward. The upper control unit 15 is attached to the upper surface of the bottom part of the case 18. On the other hand, the lower control unit 14 is attached to the case 18 so as to be detachable downward. The lower control unit 14 is attached to the lower surface of the bottom part of the case 18. The case 18 is configured to form the accommodation space SP behind the lower control unit 14 and under the upper control unit 15.

The distance between the upper control unit 15 and the lower control unit 14 is shorter than the maximum depth (maximum length in the front-back direction) of the upper control unit 15 or the lower control unit 14. The distance between the upper control unit 15 and the lower control unit 14 is shorter than the maximum width (maximum length in the left-right direction) of the upper control unit 15 or the lower control unit 14. The distance between the upper control unit 15 and the lower control unit 14 is shorter than the maximum thickness (maximum length in the up-down direction) of the upper control unit 15 or the lower control unit 14.

### <Modification Examples>

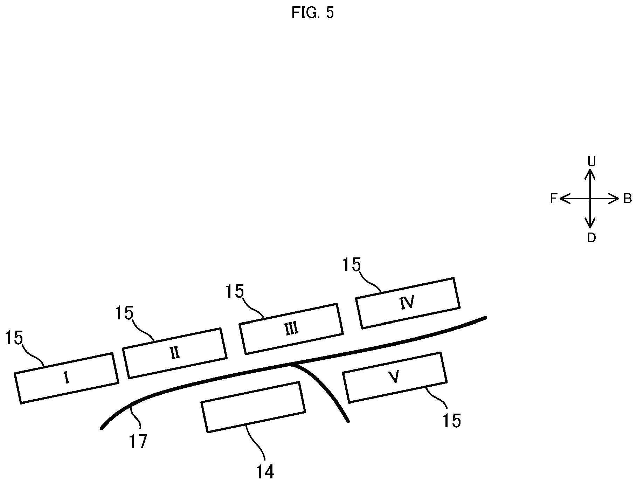

FIG. 5 is a schematic left side view of modification examples of the arrangement of the upper control unit and the lower control unit in the straddled vehicle according to the present embodiment. In FIG. 5, variations in the position of the upper control unit relative to the position of the lower control unit 14 are shown. The foregoing embodiment is described as having a configuration in which at least a portion of the lower control unit 14 is located further frontward than the upper control unit 15, which in other words is a configuration in which the upper control unit 15 is disposed in position III.

However, the upper control unit 15 may be disposed in position I. That is, the entire lower control unit 14 may be located further backward than the upper control unit 15. At least a portion of the upper control unit 15 may be located further upward than the lower control unit.

The upper control unit 15 may be disposed in position II. That is, a portion of the lower control unit 14 may be located further backward than the upper control unit 15. A portion of the upper control unit 15 may be located further frontward than the lower control unit. At least a portion of the upper control unit 15 may be located further upward than the lower control unit.

The upper control unit 15 may be disposed in position IV. That is, the entire lower control unit 14 may be located further frontward than the upper control unit 15. The entire upper control unit 15 may be located further upward than the lower control unit.

The upper control unit 15 may be disposed in position V. That is, the entire lower control unit 14 may be located further frontward than the upper control unit 15. A portion of the upper control unit 15 may be located further upward than the lower control unit.

### Reference Signs List

- 1: straddled vehicle
- 11: rear wheel
- 111: front end of rear wheel
- 112: top end of rear wheel
- 12: left seat rail
- 13: right seat rail
- 14: lower control unit
- 141: lower corner portion
- 15: upper control unit
- 151: upper corner portion
- 16: electrical component
- 17: lead wire
- 18: case
- 181: retaining part
- A1: rear narrow area
- L1: virtual line
- S1: virtual plane
- SP: accommodation space

## Claims

**1.** A straddled vehicle (1) comprising:
a rear wheel (11);
a left seat rail (12) located further leftward than a center of the straddled vehicle (1) in a left-right direction of the straddled vehicle (1), at least a portion of the left seat rail (12) extending further backward than a front end (111) of the rear wheel (11) in side view;
a right seat rail (13) located further rightward than the center of the straddled vehicle (1) in the left-right direction of the straddled vehicle (1), at least a portion of the right seat rail (13) extending further backward than the front end (111) of the rear wheel (11) in side view;
a lower control unit (14) that is configured to control the straddled vehicle (1);
an upper control unit (15) that is configured to control the straddled vehicle (1), at least a portion of the upper control unit (15) being located further upward than the lower control unit (14);
an electrical component (16) that is different from the upper control unit (15) and the lower control unit (14); and
a lead wire (17) extending in a front-back direction of the straddled vehicle (1) and connected to the electrical component (16), wherein
at least a portion of the upper control unit (15) is located further upward than the lower control unit (14) in side view, the upper control unit (15) and the lower control unit (14) are spaced apart, and thus the upper control unit (15) and the lower control unit (14) are placed in a flat orientation in a rear narrow area (A1), allowing the lead wire (17) to be routed under the upper control unit (15) and over the lower control unit (14), and run between the upper control unit (15) and the lower control unit (14) in side view to be connected to the electrical component (16), and
the rear narrow area (A1) is an area in the straddled vehicle (1) that is located further backward than the front end (111) of the rear wheel (11) in side view, further upward than a top end (112) of the rear wheel (11) in side view, and between the left and right seat rails (12, 13) in top view.

**2.** The straddled vehicle (1) according to claim 1, wherein the upper control unit (15) and the lower control unit (14) are placed in a flat orientation in the rear narrow area (A1), allowing the lead wire (17) to intersect, in side view, with a virtual line (L1) connecting corner portions (141, 151) of the upper control unit (15) and the lower control unit (14) that are closest to one another, to be connected to the electrical component (16).

**3.** The straddled vehicle (1) according to claim 1 or 2, wherein the upper control unit (15) is located further upward than a virtual plane (S1) including an upper surface of the lower control unit (14) in side view, the upper control unit (15) and the lower control unit (14) are spaced apart, and thus the upper control unit (15) and the lower control unit (14) are placed in a flat orientation in the rear narrow area (A1), allowing the lead wire (17) to run between an upper corner portion (151) and a lower corner portion (141) to be connected to the electrical component (16), the upper corner portion (151) being a corner portion closest to the lower control unit (14) among corner portions of a lower surface of the upper control unit (15) in side view, the lower corner portion (141) being a corner portion closest to the upper corner portion (151) among corner portions of an upper surface of the lower control unit (14).

**4.** The straddled vehicle (1) according to any one of claims 1 to 3, wherein at least a portion of the lower control unit (14) is located further frontward than the upper control unit (15) in side view, the upper control unit (15) and the lower control unit (14) are spaced apart, and thus the upper control unit (15) and the lower control unit (14) are placed in a flat orientation in the rear narrow area (A1), allowing the lead wire (17) to run between the upper control unit (15) and the lower control unit (14) in side view to be connected to the electrical component (16).

**5.** The straddled vehicle (1) according to any one of claims 1 to 4, wherein at least a portion of the upper control unit (15) overlaps the lower control unit (14) in top view, the upper control unit (15) and the lower control unit (14) are spaced apart in side view, and thus the upper control unit (15) and the lower control unit (14) are placed in a flat orientation in the rear narrow area (A1), allowing the lead wire (17) to run through an overlapping area where at least a portion of the upper control unit (15) overlaps the lower control unit (14) in top view, to be connected to the electrical component (16).

**6.** The straddled vehicle (1) according to any one of claims 1 to 5, further comprising a case (18) attached to the left seat rail (12) and the right seat rail (13) and supporting the upper control unit (15) and the lower control unit (14), wherein
the upper control unit (15) is attached to the case (18) so as to be detachable upward and the lower control unit (14) is attached to the case (18) so as to be detachable downward in side view, the upper control unit (15) and the lower control unit (14) are spaced apart, and thus the upper control unit (15) and the lower control unit (14) are placed in a flat orientation in the rear narrow area (A1), allowing the lead wire (17) to run between the upper control unit (15) and the lower control unit (14) in side view to be connected to the electrical component (16).

**7.** The straddled vehicle (1) according to any one of claims 1 to 6, further comprising a or the case (18) attached to the left seat rail (12) and the right seat rail (13) and supporting the upper control unit (15) and the lower control unit (14), the case (18) including a retaining part (181) provided on a path of the lead wire (17), wherein
the retaining part (181) restricts a range of motion of the lead wire (17) at least in an up-down direction, and the upper control unit (15) and the lower control unit (14) are placed in a flat orientation in the rear narrow area (A1), allowing the lead wire (17) to run between the upper control unit (15) and the lower control unit (14) in side view to be connected to the electrical component (16).

**8.** The straddled vehicle (1) according to any one of claims 1 to 7, wherein at least a portion of the lower control unit (14) is located further frontward than the upper control unit (15) in side view, the upper control unit (15) and the lower control unit (14) are spaced apart, and thus the upper control unit (15) and the lower control unit (14) are placed in a flat orientation in the rear narrow area (A1), allowing the lead wire (17) to run between the upper control unit (15) and the lower control unit (14) in side view to be connected to the electrical component (16), and allowing an accommodation space (SP) for accommodating a component to be provided under the upper control unit (15) and behind the lower control unit (14).

**9.** The straddled vehicle (1) according to any one of claims 1 to 8, wherein the upper control unit (15) and the lower control unit (14) are spaced apart by a distance shorter than the maximum depth of the upper control unit (15) or the lower control unit (14), and thus the upper control unit (15) and the lower control unit (14) are placed in a flat orientation in the rear narrow area (A1), allowing the lead wire (17) to run between the upper control unit (15) and the lower control unit (14) to be connected to the electrical component (16).

**10.** The straddled vehicle (1) according to any one of claims 1 to 9, wherein the upper control unit (15) and the lower control unit (14) are spaced apart by a distance shorter than the maximum width of the upper control unit (15) or the lower control unit (14), and thus the upper control unit (15) and the lower control unit (14) are placed in a flat orientation in the rear narrow area (A1), allowing the lead wire (17) to run between the upper control unit (15) and the lower control unit (14) to be connected to the electrical component (16).

**10.** The straddled vehicle (1) according to any one of claims 1 to 10, wherein the upper control unit (15) and the lower control unit (14) are spaced apart by a distance shorter than the maximum thickness of the upper control unit (15) or the lower control unit (14), and thus the upper control unit (15) and the lower control unit (14) are placed in a flat orientation in the rear narrow area (A1), allowing the lead wire (17) to run between the upper control unit (15) and the lower control unit (14) to be connected to the electrical component (16).

**12.** The straddled vehicle (1) according to any one of claims 1 to 11, wherein the electrical component (16) is located further backward than the upper control unit (15) and the lower control unit (14), and the upper control unit (15) and the lower control unit (14) are placed in a flat orientation in the rear narrow area (A1), allowing the lead wire (17) to be connected to the electrical component (16).

**13.** The straddled vehicle (1) according to claim 12, wherein the electrical component (16) is rear lighting equipment, and the upper control unit (15) and the lower control unit (14) are placed in a flat orientation in the rear narrow area (A1), allowing the lead wire (17) to be connected to the electrical component (16).
